# EUROPEAN PATENT SPECIFICATION

(11) **EP 3 078 556 B1**
(45) Date of publication and mention of the grant of the patent: **20.12.2017**
(21) Application number: 15162961.5
(22) Date of filing: 09.04.2015
(51) Int. Cl.: B60T 8/1755, B60T 8/88

(54) **METHOD OF CONTROLLING A BRAKE-BY-WIRE SYSTEM**
VERFAHREN ZUM STEUERN EINES BRAKE-BYWIRE SYSTEMS
PROCÉDÉ DE COMMANDE D'UN SYSTÈME DE FREINAGE INTÉGRÉ

(43) Date of publication of application: 12.10.2016
(73) Proprietor: Ford Global Technologies, LLC, Dearborn, MI 48126 (US)
(72) Inventor: Jurkiw, Tim, Macomb, MI 48042 (US); Svensson, Thomas, 42799 Leichlingen (DE)
(74) Representative: Illing, Rolf

(56) References cited:
- EP-A1- 1 132 273
- EP-A1- 1 207 083
- EP-A1- 1 468 887
- WO-A1-2004/005096
- DE-A1- 10 144 797
- US-A1- 2003 037 968
- US-A1- 2005 057 095
- US-A1- 2014 229 065
- US-A1- 2014 379 216

## Description

The present invention relates in general to a method of controlling a brake-by-wire (BBW) system. More in particular, the present invention relates to a method of adjusting performance of a brake-by-wire system in vehicles having both a brake-by-wire (BBW) system and an Electrical-Power-Assisted-Steering (EPAS) system.

The present invention is related to two well-known systems used in vehicles: 1) electrical steering system and 2) electrical braking systems, which are briefly described hereafter.

In automobiles and especially heavy duty vehicles (trucks, tanks, etc.), power steering (also known as power assisted steering (PAS) or steering assist system) helps drivers steer by augmenting steering effort of the steering wheel. There are basically two systems in use: hydraulic systems, and more recently electrical systems, using respectively hydraulic or electric actuators to add controlled energy to the steering mechanism, so the driver needs to provide only modest effort. Both systems however still have a direct mechanical connection between the steering wheel and the linkage that steers the wheels. This means that power-steering system failure still permits the vehicle to be steered using manual effort alone, at least in theory, because the force/torque required to steer may be considerable. Hydraulic steering systems have several drawbacks. One disadvantage is that they are belt-driven by the engine, which consumes a considerable amount of power (typically about 5% to 15% of the fuel consumption), even when no steering assistance is required. For this and other reasons, there is a general tendency to replace the hydraulic actuators by electric actuators, which are much easier to control, and only consume power when needed.

The US patent US 2005/057095 A1 (HAC ALEKSANDER B [US]) 17 March 2005 (2005-03-17) discloses a system in which : a brake force lost corresponding to a failed brake of a vehicle is determined. A brake force reserve is determined corresponding to a non-failed brake. A command brake force is determined based on the brake force lost and the brake force reserve. The command brake force is applied to the non-failed brake, where one of an undesired yaw moment and a yaw moment rate of change is limited to preset values.

Brake-by-wire technology (known as BBW) in automotive industry represents the replacement of traditional brake components such as pumps, hoses, fluids, belts and vacuum servos and master cylinders with electronic sensors and actuators.

However, vehicles having both brake-by-wire (BBW) and Electrical Power Assisted Steering (EPAS) may not function well under all circumstances.

The present invention has the object to adjust performance of a brake-by-wire system to prevent draining the battery in some scenarios.

It is a particular object of the present invention to adjust performance of a brake-by-wire system in a scenario where electrical power from the vehicle battery is also required for electrical steering assistance, in order to prevent draining the battery, to such an extent that steering assistance would be lost, which would be a very dangerous situation, especially at relatively high speed (e.g. above 50 km/h).

This object is achieved by a method having the features of claim 1. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figure.

In an advantageous embodiment, the present invention discloses a method of controlling a brake-by-wire system in a vehicle comprising both a brake-by-wire system and an Electrical-Power-Assisted-Steering system, the method comprising the steps of: obtaining a braking value indicative of an actual brake request; obtaining an actual steering (or turning) value of the vehicle; testing in a first test if the braking value is larger than a first predetermined threshold value, and testing in a second test if an absolute value of the steering value is larger than a second predetermined threshold value, and if the outcome of at least one of the first and second test is false, applying a brake pressure corresponding to the requested braking value using a predefined standard ramp rate; and if the outcome of both the first and second test is true, applying a brake pressure corresponding to the requested braking value but using a modified ramp rate lower than the predefined standard ramp rate.

It is an advantage of this method that it reduces the power delivered to the braking system by limiting the braking ramp in a scenario where power from the battery is needed for both the steering and the braking (for example, when the vehicle is making a turn at relatively high speed, while braking). By choosing the modified ramp (rather than a very steep ramp), a severe voltage drop of the battery can be prevented. In this way both the steering system and the braking system can continue to work, albeit with a slightly decreased braking power, but by choosing appropriate values, this effect may be hardly noticeable to the user. It is a major advantage of this method that it strongly reduces the risk of loosing steering control due to drainage of the battery, with all its consequences. This method thus helps to keep driving safe under all conditions, also during braking while turning at a relatively high speed (e.g. higher than about 50 km/h).

According to a further advantageous embodiment of the present invention, the method may further comprise the steps of: determining a braking rate value as a time derivative of the braking value; determining a steering rate value as a time derivative of the steering (or turning) value; testing in a third test if the braking rate value is larger than a third predetermined threshold and testing in a fourth test if the steering rate value is larger than a fourth predetermined value, and if the outcome of both the third and fourth test is true, applying a brake pressure corresponding to the requested braking value using the modified ramp rate lower than the predetermined standard ramp rate, irrespective of the outcome of the first and second test.

It is an advantage of this method that not only the absolute value of steering and of the braking request is considered, but also their rate of change over time. This may for example be particularly helpful in a scenario where the driver suddenly has to make an evading maneuver, to guarantee that sufficient energy goes to the steering system to make that maneuver.

According to a further advantageous embodiment of the present invention, the method may further comprise the step of: testing in a fifth test if the voltage of the power supply is lower than a fifth predetermined value, and if the outcome of the fifth test is true, temporarily releasing the braking for a predetermined duration.

It is an advantage of this method that, in a scenario where the status of the battery is becoming problematic, that priority is given to the steering assistance, because loss of steering assistance typically has much more severe consequences than temporal loss of braking. The idea behind this scenario is that by temporarily interrupting the braking, the battery may get a chance to slightly recover. It is noted that such interrupted braking may appear similar to the driver as braking by an ABS system (Anti-lock Braking System).

Further features and advantages of the present invention will become apparent from the following description of a non-limiting embodiment of the invention which will be explained below with reference to the drawing. In this drawing:

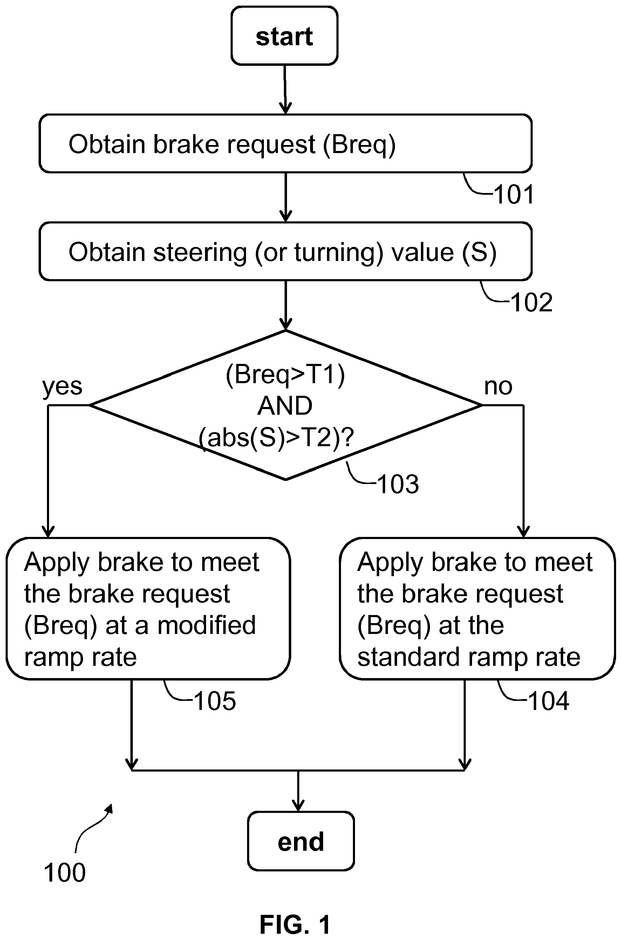

- FIG. 1: is a flow chart demonstrating the steps of a method according to the present invention

The present invention is related to vehicles, having a constrained electrical power supply, such as e.g. a 12 Volt battery, where power supply may be severely limited for other functions, when systems such as Electric Power Assisted-Steering (EPAS) are in high demand (for example when the vehicle is turning).

Another system that adds significant load to the system is an electric braking system, known as brake-by-wire (BBW) system. This is especially true for those BBW systems that can perform boosted brake pressure generation via an electrically power pressure generation device, if not constrained. Such BBW systems have the capability of building boosted brake pressure at build rates (bar/s) far exceeding the capabilities of conventional vacuum boosted braking systems.

When both systems (i.e. electrical steering system and electrical braking system) are in high demand at the same time, such as for example during events where high steering input and large braking requests are simultaneously being made, a method is required to manage the power consumption.

According to the present invention, a method is provided which can be performed by the brake-by-wire control unit, to limit or reduce the power consumption of the brake system in such cases, so that the vehicle electrical loads do not cause a severe power drop that would cause a loss of assist from the steering system.

Brake by wire systems are known in the art, and such systems usually have stability control functionality and the ability to read wheel speed information from wheel speed sensors connected to a brake controller unit. Based on the data from those sensors it is possible for the brake-by-wire system controller to determine if the vehicle is being turned (and by which amount) via an evaluation of the wheel speed data received from the wheel speed sensors. Thus the BBW system can derive a steering value from the wheel motions, even though the BBW system typically is not directly connected to the steering wheel. This determination of steering information corresponds to step 102 of the method of FIG. 1, where a steering value S is obtained (albeit that actually a turning value is obtained, which is equivalent). The method of FIG. 1 further comprises a step 101 where a current brake request value Breq is obtained, for example using a brake sensor connected to the brake pedal. In step 103, it is tested whether the brake request Breq is larger than a first predefined threshold T1 (test1), and whether an absolute value of the steering value S is larger than a second predefined threshold T2 (test2). Both threshold values T1 and T2 may be determined during a calibration stage. If the outcome of test1 is false, or the outcome of test2 is false, or both, it is concluded that at least one of the BBW and the EPAS are not in high power demand, and no corrective measure needs to be taken. Thus, the requested brake action is performed (step 104) using a predefined standard ramp rate. However, if the outcome of both test1 and test2 is true, it means that both the BBW and EPAS system are in high demand and corrective action is required. According to the present invention, in this situation the brake request is applied (step 105), but using a modified ramp rate smaller than the standard ramp rate, so as to reduce the power demand of the BBW system in favor of the EPAS system.

The behavior of this embodiment can be represented by Table 1, where logical '0' represents FALSE, and logical '1' represents TRUE.

**Table 1: truth table for first embodiment**

| test1 Breq>T1? | test2 abs(S)>T2? | Braking rate |
|---|---|---|
| 0 | 0 | standard ramp rate |
| 0 | 1 | standard ramp rate |
| 1 | 0 | standard ramp rate |
| 1 | 1 | **modified ramp rate** |

In a second embodiment of the present invention, not only the value of the brake request, and the absolute value of the steering value are compared to respective thresholds T1, T2, but the time derivatives of these values Breq and S are determined, e.g. calculated (referred to herein as brake rate BR and steering rate SR), and these rates are compared to a third and fourth predefined threshold value T3, T4 respectively. And if it is found that the brake rate is larger than T3 and the steering rate is larger than T4, then also in this case the brake request Breq is applied with the modified ramp rate as shown in step 105. In other words, in this second embodiment, if it is found that either the first and second threshold T1 and T2, or the third and fourth threshold T3 and T4 are violated then the pressure build rate of the BBW system is reduced to a predefined rate which will limit the power consumption of the electromechanical pressure generation device. The values of T3 and T4 can be determined during a calibration phase.

The behavior of this embodiment can be represented by Table 2, where logical '0' represents FALSE, and logical '1' represents TRUE.

**Table 2: truth table for second embodiment**

| test1 Breq>T1? | test2 abs(S)>T2? | test3 BR>T3? | test4 SR>T4? | Braking rate |
|---|---|---|---|---|
| 0 | 0 | 0 | 0 | standard ramp rate |
| 0 | 0 | 0 | 1 | standard ramp rate |
| 0 | 0 | 1 | 0 | standard ramp rate |
| **0** | **0** | **1** | **1** | **modified ramp rate** |
| 0 | 1 | 0 | 0 | standard ramp rate |
| 0 | 1 | 0 | 1 | standard ramp rate |
| 0 | 1 | 1 | 0 | standard ramp rate |
| 0 | 1 | **1** | **1** | **modified ramp rate** |
| 1 | 0 | 0 | 0 | standard ramp rate |
| 1 | 0 | 0 | 1 | standard ramp rate |
| 1 | 0 | 1 | 0 | standard ramp rate |
| 1 | 0 | **1** | **1** | **modified ramp rate** |
| **1** | **1** | 0 | 0 | **modified ramp rate** |
| **1** | **1** | 0 | 1 | **modified ramp rate** |
| **1** | **1** | 1 | 0 | **modified ramp rate** |
| **1** | **1** | 1 | 1 | **modified ramp rate** |

Optionally, the aforementioned predefined modified pressure build level (modified ramp rate) is chosen equal to the brake pressure build rate capability of a conventional vacuum boosted brake system. This capability level would be adjusted based on the foundation brake sizing of the system, but other suitable ramp rates may also be chosen by the skilled person, so as to ensure adequate braking performance. Of course, the modified ramp rate should not be so severely limited that the performance of the BBW system no longer provides regulatory required braking capability. This also limits the control authority of this performance reduction function such that braking capability remains intact.

The method may also contain a step of measuring the health of the power system, for example by measuring the voltage of the battery, and may compare the measured voltage with a fifth predetermined threshold T5, and in case the voltage of the power supply is lower than the fifth predetermined value T5, the BBW controller may temporarily release or interrupt the braking for a predetermined time duration Δt, for example in a manner similar to ABS (Anti-lock Braking System). Alternatively, the electrical braking could be completely deactivated, leaving only mechanical braking, if available. The latter can be seen as a last resort of avoiding draw down of the vehicle power supply, for example the 12V battery.

In summary, the proposed method thus provides a means to protect the 12V power supply against drawdowns due to the simultaneous use of a BBW system and EPAS system, by adjusting the braking pressure build rate based on determination of steering events. The method may optionally also monitor the state of the power supply, e.g. of the 12V battery, but that is not absolutely necessary. As described, the proposed method can protect or favor the power supply to the EPAS-system by gracefully reducing the system performance of the braking system to levels comparable with conventional brake pressure build rates. In this manner the degradation may not even be noticeable to the driver. In severe situations, the braking may be replaced by an interrupted braking, similar to ABS.

## Claims

1. Method (100) of controlling a brake-by-wire system in a vehicle comprising both a brake-by-wire system (BBW) and an Electrical-Power-Assisted-Steering system (EPAS), the method comprising the steps of:
- obtaining (101) a braking value (Breq) indicative of an actual brake request;
- obtaining (102) a steering value (S) of the vehicle;
- testing (103) in a first test (test1) if the braking value (Breq) is larger than a first predetermined threshold value (T1) and testing (103) in a second test (test2) if an absolute value of the steering value (S) is larger than a second predetermined threshold value (T2),
and if the outcome of at least one of the first and second test (test1, test2) is false, applying a brake pressure corresponding to the requested braking value (Breq) using a predefined standard ramp rate;
and if the outcome of both the first and second test (test1, test2) is true, applying a brake pressure corresponding to the requested braking value (Breq) but using a modified ramp rate lower than the standard ramp rate.

2. Method according to claim 1, further comprising the steps of:
- determining a braking rate value (BR) as a time derivative of the braking value;
- determining a steering rate value (SR) as a time derivative of the steering value;
- testing in a third test (test3) if the braking rate value (BR) is larger than a third predetermined threshold (T3) and testing in a fourth test (test4) if the steering rate value (SR) is larger than a fourth predetermined value (T4),
and if the outcome of both the third and fourth test (test3, test4) is true, applying a brake pressure corresponding to the requested braking value (Breq) using the modified ramp rate lower than the standard ramp rate, irrespective of the outcome of the first and second test (test1, test2).

3. Method according to any of the previous claims, further comprising the step of:
- testing in a fifth test (test5) if the voltage of the power supply is lower than a fifth predetermined value (T5), and if the outcome of the fifth test is true, temporarily releasing the braking for a predetermined duration (Δt).

## Patentansprüche

1. Verfahren (100) zum Steuern eines Brake-by-Wire-Systems in einem Fahrzeug, das sowohl ein Brake-by-Wire-System (BBW) als auch ein elektrisch unterstütztes Lenksystem (Electrical-Power-Assisted-Steering system, EPAS) umfasst, wobei das Verfahren die folgenden Schritte umfasst:
- Gewinnen (101) eines Bremswertes (Breq), der eine aktuelle Bremsanforderung anzeigt;
- Gewinnen (102) eines Lenkungswertes (S) des Fahrzeugs;
- Testen (103), in einem ersten Test (test1), ob der Bremswert (Breq) größer ist als ein vorbestimmter Schwellwert (T1), und Testen (103) in einem zweiten Test (test2), ob ein absoluter Wert des Lenkungswertes (S) größer ist als ein zweiter vorbestimmter Schwellwert (T2),
und falls das Ergebnis von wenigstens dem ersten und/oder dem zweiten Test (test1, test2) "falsch" ("false") ist, Anwenden eines Bremsdrucks entsprechend dem angeforderten Bremswert (Breq) unter Verwendung einer vordefinierten standardmäßigen Rampengeschwindigkeit;
und falls das Ergebnis sowohl des ersten als auch des zweiten Tests (test1, test2) "wahr" ("true") ist, Anwenden eines Bremsdrucks entsprechend dem angeforderten Bremswert (Breq), jedoch unter Verwendung einer modifizierten Rampengeschwindigkeit, die niedriger ist als die standardmäßige Rampengeschwindigkeit.

2. Verfahren gemäß Anspruch 1, wobei das Verfahren ferner folgende Schritte umfasst:
- Bestimmen eines Bremsverzögerungswertes (BR) als Zeitableitung des Bremswertes;
- Bestimmen eines Lenkgeschwindigkeitswertes (SR) als Zeitableitung des Lenkungswertes;
- Testen, in einem dritten Test (test3), ob der Bremsverzögerungswert (BR) größer ist als ein dritter vorbestimmter Schwellwert (T3), und Testen, in einem vierten Test (test4), ob der Lenkgeschwindigkeitswert (SR) größer ist als ein vierter vorbestimmter Wert (T4),
und falls das Ergebnis sowohl des dritten als auch des vierten Tests (test3, test4) "wahr" ("true") ist, Anwenden eines Bremsdrucks entsprechend dem angeforderten Bremswert (Breq) unter Verwendung der modifizierten Rampengeschwindigkeit, die niedriger ist als die standardmäßige Rampengeschwindigkeit, unabhängig vom Ergebnis des ersten bzw. zweiten Tests (test1, test2).

3. Verfahren gemäß einem der vorstehenden Ansprüche, ferner den Schritt umfassend:
- Testen, in einem fünften Test (test5), ob die Spannung der Stromversorgung niedriger ist als ein fünfter vorbestimmter Wert (T5), und, falls das Ergebnis des fünften Tests "wahr" ("true") ist, vorübergehendes Lösen der Bremse für eine vorbestimmte Dauer (Δt).

## Revendications

1. Procédé (100) de commande d'un système de freinage intégré dans un véhicule comprenant à la fois un système de freinage intégré (BBW) et un système de direction assistée électrique (EPAS), ce procédé comprenant les étapes consistant à :
- obtenir (101) une valeur de freinage (Breq) indicative d'une demande de freinage réelle ;
- obtenir (102) une valeur de direction (S) du véhicule ;
- tester (103) lors d'un premier test (test1) si la valeur de freinage (Breq) est plus grande qu'une première valeur de seuil prédéterminée (T1) et tester (103) lors d'un deuxième test (test2) si une valeur absolue de la valeur de direction (S) est plus grande qu'une deuxième valeur de seuil prédéterminée (T2),
et à, si le résultat d'au moins soit le premier, soit le deuxième test (Test1, test2) est faux, appliquer une pression de freinage correspondant à la valeur de freinage demandée (Breq) en utilisant un taux de rampe standard prédéfini ;
et à, si le résultat d'à la fois le premier test et le deuxième test (test1, test2) est vrai, appliquer une pression de freinage correspondant à la valeur de freinage demandée (Breq) mais en utilisant un taux de rampe modifié plus bas que le taux de rampe standard.

2. Procédé selon la revendication 1, comprenant en outre les étapes consistant à :
- déterminer une valeur de taux de freinage (BR) comme dérivée temporelle de la valeur de freinage ;
- déterminer une valeur de taux de direction (SR) comme dérivée temporelle de la valeur de direction ;
- tester lors d'un troisième test (test3) si la valeur du taux de freinage (BR) est plus grande qu'un troisième seuil prédéterminé (T3) et tester lors d'un quatrième test (test4) si la valeur du taux de direction (SR) est plus grande qu'une troisième valeur prédéterminée (T4),
et à, si le résultat d'à la fois le troisième test et le quatrième test (test3, test4) est vrai, appliquer une pression de freinage correspondant à la valeur de freinage demandée (Breq) en utilisant le taux de rampe modifié plus bas que le taux de rampe standard, quel que soit le résultat du premier et du deuxième test (test1, test2).

3. Procédé selon l'une quelconque des revendications précédentes, comprenant en outre l'étape consistant à :
- tester lors d'un cinquième test (test5) si la tension de l'alimentation électrique est plus base qu'une cinquième valeur prédéterminée (T5), et, si le résultat du cinquième essai est vrai, relâcher temporairement le freinage pendant une durée prédéterminée (Δt).
